# FASCICULE DE BREVET EUROPEEN

(11) **EP 3 304 563 B1**
(45) Date de publication et mention de la délivrance du brevet: **03.04.2019**
(21) Numéro de dépôt: 16726334.2
(22) Date de dépôt: 02.06.2016
(51) Int. Cl.: G21F 9/30, B65G 69/04, C03B 5/00, C03C 1/00, C03B 5/02, B65D 88/66

(54) **OUTIL DE LISSAGE EN MILIEU RADIOACTIF, COMPRENANT UNE GRILLE VIBRANTE**
WERKZEUG ZUM GLÄTTEN IN EINER RADIOAKTIVEN UMGEBUNG MIT RÜTTELSIEB
TOOL FOR SMOOTHING IN A RADIOACTIVE ENVIRONMENT, COMPRISING A VIBRATING GRID

(30) Priorité: 05.06.2015 FR 1555151
(43) Date de publication de la demande: 11.04.2018
(73) Titulaire: Orano Cycle, 92400 Courbevoie (FR)
(72) Inventeur: CASSANY, Yohann, 50110 Tourlaville (FR)
(74) Mandataire: Brevalex
(86) Numéro de dépôt international: PCT/EP2016/062464
(87) Numéro de publication internationale: WO 2016/193357

(56) Documents cités:
- GB-A- 2 099 207
- US-A- 2 685 986
- US-A- 5 134 946
- DATABASE WPI Week 197806 18 janvier 1978 (1978-01-18) Thomson Scientific, London, GB; AN 1978-B2246A XP002755816, -& NL 7 607 943 A (GARDENBROEKS V NAVO) 18 janvier 1978 (1978-01-18)

## Description

### DOMAINE TECHNIQUE

L'invention concerne un outil de lissage en milieu radioactif d'un matériau granulaire ou pulvérulent, notamment de la fritte de verre.

### ÉTAT DE LA TECHNIQUE ANTÉRIEURE

De la fritte de verre est utilisée pour vitrifier des déchets radioactifs issus de l'industrie nucléaire. La fritte de verre a un aspect granulaire et, lorsqu'elle est introduite dans un creuset, elle forme un tas conique qui nécessite d'être lissé jusqu'à obtenir une planéité convenable. Elle est ensuite mise en fusion, avant d'insérer les déchets radioactifs dans le creuset pour les vitrifier.

GB 2 099 207 divulgue un récipient vibrant pour tasser de la fritte de verre en milieu radioactif.

A ce jour, il n'existe aucun outil de lissage qui puisse être facilement utilisé en milieu radioactif. En particulier, un outil de type râteau est d'utilisation malaisée en présence d'un niveau de radioactivité dangereux pour un opérateur humain.

### EXPOSÉ DE L'INVENTION

L'invention vise à résoudre au moins partiellement les problèmes rencontrés dans les solutions connues, notamment de disposer d'un moyen de lissage de la surface de la fritte de verre introduite dans un creuset, dont la particularité est d'être un creuset froid chauffé par induction nécessitant l'utilisation d'un anneau de métallothermie pour amorcer la fusion, cet anneau devant être positionné sur la surface sensiblement plane de la fritte de verre.

A cet égard, l'invention a donc pour objet un outil de lissage configuré pour lisser de la fritte de verre en milieu radioactif, comprenant :
une tige,
une grille conçue pour être en contact de la fritte de verre à lisser, la grille étant reliée mécaniquement à la tige, et
au moins un vibrateur configuré pour faire vibrer la grille.

L'outil de lissage permet de lisser le tas formé par la fritte de verre jusqu'à obtenir une planéité convenable, avant de faire chauffer le creuset. L'outil de lissage peut être commandé à distance des radiations relativement aisément, par exemple par un dispositif de télé opération de type maître / esclave.

De manière générale, le(s) vibrateurs peut (peuvent) faire vibrer directement la grille, il(s) peut (peuvent) faire vibrer la tige qui transmet les vibrations à la grille, ou bien il(s) peut(peuvent) faire vibrer à la fois la grille et la tige.

L'invention peut comporter de manière facultative une ou plusieurs des caractéristiques suivantes combinées entre elles ou non.

Avantageusement, le(s) vibrateur(s) est (sont) configuré(s) pour faire vibrer pneumatiquement la grille, en étant alimenté en gaz sous pression, par exemple en air sous pression.

Selon une particularité de réalisation, le au moins un vibrateur comprend un élément vibrant pneumatique fixé à la grille et configuré pour faire vibrer la grille. Il comprend également un tuyau s'étendant le long de la tige et destiné à alimenter l'élément vibrant pneumatique en gaz sous pression.

Selon une forme de réalisation avantageuse, la grille est reliée de façon mobile par rapport à la tige.

Avantageusement, la grille est configurée pour pivoter par rapport à la tige, de préférence autour d'un axe orthogonal à l'axe longitudinal de la tige.

Selon une autre forme de réalisation avantageuse, la grille comporte des évidements répartis selon un maillage régulier.

De préférence, l'outil de lissage comprend une bride de maintien configurée pour être fixée sur un couvercle pour creuset de fusion par induction, en particulier un creuset froid de fusion par induction, la tige traversant la bride de maintien et étant mobile par rapport à la bride de maintien, de préférence au moins en translation.

Selon une autre particularité de réalisation, la tige est configurée pour pivoter relativement à la bride de maintien autour d'un premier axe de rotation, en étant de préférence reliée au moins par une liaison rotule à la bride de maintien.

De préférence, la bride de maintien comporte un orifice de passage d'un tuyau d'alimentation en gaz sous pression, tel que de l'air sous pression.

L'invention porte également sur un creuset pour la fusion par induction, de préférence en creuset froid, de matière radioactive et de fritte de verre, comprenant :
un réceptacle comprenant un fond et un couvercle, le réceptacle délimitant une cavité, et
un outil de lissage tel que défini ci-dessus, la grille étant configurée pour être logée dans la cavité pour lisser de la fritte de verre à l'intérieur de la cavité.

L'invention se rapporte aussi à un creuset tel que défini ci-dessus, comprenant une bride de maintien fixée au couvercle, le couvercle comprenant une ouverture d'introduction de matières, notamment la matière radioactive, et une bouche pour le passage de l'outil de lissage.

### BRÈVE DESCRIPTION DES DESSINS

La présente invention sera mieux comprise en référence aux dessins annexés :
- la figure 1 représente schématiquement en élévation un creuset froid de fusion par induction pour la vitrification de déchet radioactif équipé d'un outil de lissage selon un mode de réalisation préféré de l'invention ;
- la figure 2 est une représentation schématique en élévation de l'outil de lissage du mode de réalisation préféré ;
- la figure 3 est une vue de dessus en coupe transversale de la tige de l'outil de lissage du mode de réalisation préféré ;
- la figure 4 est une représentation schématique partielle en coupe longitudinale selon l'axe de la tige de l'outil de lissage du mode de réalisation préféré.

### EXPOSÉ DÉTAILLÉ DE MODES DE RÉALISATION PARTICULIERS

Des parties identiques, similaires ou équivalentes des différentes figures portent les mêmes références numériques de façon à faciliter le passage d'une figure à l'autre.

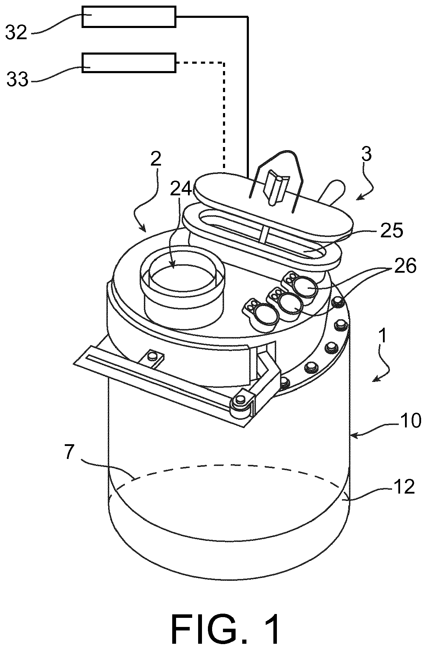

La figure 1 représente un creuset froid 1 de fusion par induction pour vitrifier des déchets radioactifs à l'aide de fritte de verre 7. La fritte de verre 7 et les déchets radioactifs, constitués par exemple de produits de fission issus du traitement des combustibles nucléaires irradiés, sont chauffés par induction dans le creuset froid 1.

Ce creuset froid 1 comprend un réceptacle qui comporte une virole cylindrique 10, un ou plusieurs inducteurs (non représentés) entourant la virole 10, une sole inférieure 12 qui sert de fond du réceptacle, et un dôme 2 en tant que couvercle du réceptacle. Le creuset froid 1 est équipé d'un outil de lissage 3 pour lisser la fritte de verre 7 à l'intérieur du réceptacle, avant de la faire chauffer.

Le dôme 2 est fixé à la partie supérieure de la virole 10. Il comporte une ouverture 24 d'introduction de matières, notamment les matières radioactives à vitrifier, une bouche 25 utilisée pour introduire l'outil de lissage et des orifices 26 pour des équipements de mesure tels qu'une canne pour mesurer la température à l'intérieur du creuset 1.

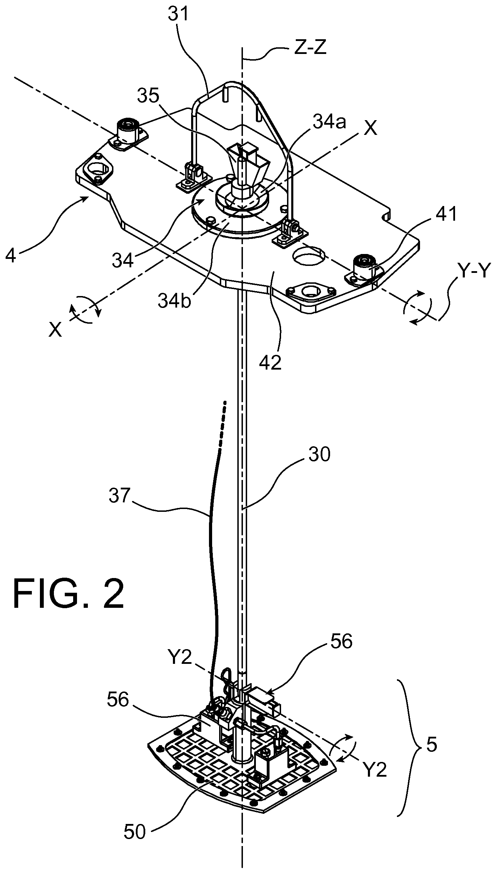

En référence à la figure 2, l'outil de lissage 3 comporte une anse de préhension 31 et une bride de maintien 4 à laquelle l'anse de préhension 31 est fixée à ses deux extrémités, par exemple par boulonnage. Cet outil comprend également une tige 30 traversant la bride de maintien 4, ainsi qu'un plateau vibrant 5 relié mécaniquement à la tige 30.

L'outil de lissage 3 est déplacé et maintenu en position en regard de la bouche 25, à l'aide d'un dispositif de préhension 32. Ce dispositif de préhension 32 comprend un crochet ou une corde qui coopère avec l'anse de préhension 31.

La tige 30 comporte dans sa partie supérieure une hotte 35. Cette hotte 35 sert d'interface avec une pince de télémanipulateur (non représentée) d'un dispositif de télé opération 33 pour manipuler la tige 30. Le télémanipulateur est configuré pour déplacer le plateau 5 à l'intérieur du creuset 1 pour y lisser la fritte de verre 7.

La bride de maintien 4 est fixée de manière démontable par des boulons 41 sur le dôme 2, au-dessus de la bouche 25 et en dessous de la hotte 35. La bride 4 a la forme d'une plaque 42 sensiblement rectangulaire située dans un plan défini par un premier axe X-X et un deuxième axe Y-Y perpendiculaire à l'axe X-X. Elle est traversée dans sa partie centrale par la tige 30 et elle comporte au moins un trou pour laisser passer un tuyau flexible 37 qui s'étend le long de la tige 30.

Sur la figure 2, l'axe longitudinal de la tige Z-Z est représenté de manière orthogonale à l'axe X-X et à l'axe Y-Y, mais l'inclinaison de l'axe longitudinal Z-Z est variable par rapport aux axes X-X et Y-Y.

La tige 30 est entre autres reliée à la bride de maintien 4 par une rotule 34. La rotule 34 comporte une bride interne 34a autour de la tige 30 et une bride externe 34b entourant la bride interne 34a. La rotule 34 permet une rotation de la tige 30 relativement à la bride de maintien 4 autour de l'axe X-X qui constitue un premier axe de rotation, autour de l'axe Y-Y qui constitue un deuxième axe de rotation et autour de l'axe longitudinal Z-Z qui constitue un troisième axe de rotation.

En plus de pivoter autour du premier axe de rotation X-X et autour du deuxième axe de rotation Y-Y, la tige 30 est mobile en translation selon l'axe longitudinal Z-Z par rapport à la bride de maintien 4. La tige 30 est ainsi guidée relativement à la bride 4 avec quatre degrés de liberté.

Dans sa partie inférieure qui est située sous la bride de maintien 4, l'outil de lissage 3 comprend un plateau vibrant 5. Le plateau vibrant 5 est relié mécaniquement à la tige 30 à l'opposé de l'anse de préhension 31 le long de l'axe longitudinal Z-Z. Ce plateau 5 comporte une grille 50 destinée à être en appui sur la surface de la fritte de verre 7 et des éléments vibrant 56 configurés pour faire vibrer la grille 50.

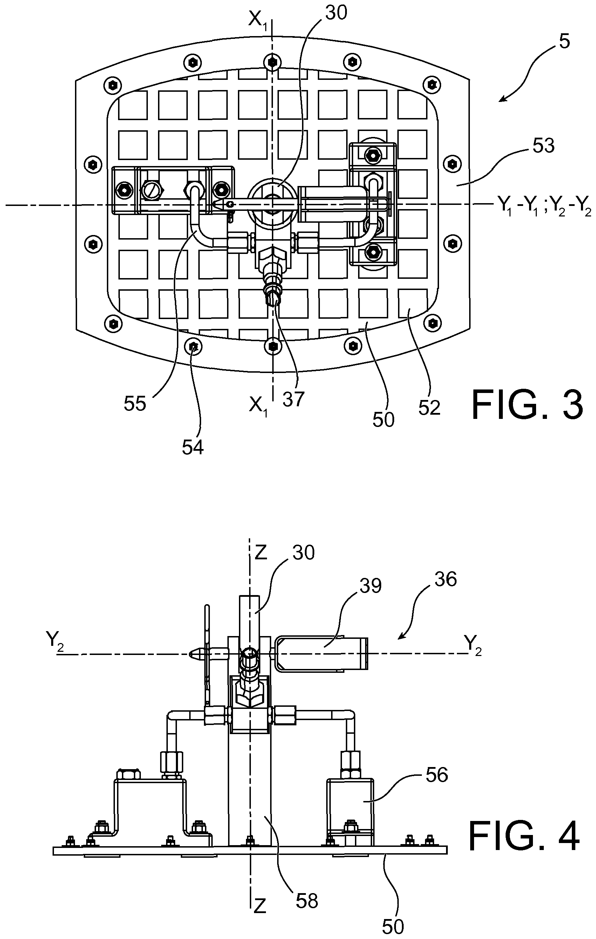

En référence à la figure 3, la grille 50 comporte des trous traversants 52 en forme de carrés. Ces trous 52 sont répartis en rangées rectilignes parallèles les unes aux autres, selon un maillage régulier. Ils sont aussi répartis en colonnes rectilignes parallèles les unes aux autres, selon un maillage régulier. Le maillage de la grille est choisi de façon à ce que la grille 50 ne s'enfonce pas dans la fritte de verre 7, tout en transmettant des vibrations mécaniques à la fritte de verre 7 pour la lisser.

La grille 50 présente une forme générale de quadrilatère avec deux côtés sensiblement parallèle et deux côtés courbés. Elle est sensiblement plane. Elle présente deux axes de symétrie, dans le plan de la figure 3, X1-X1 et Y1-Y1 qui sont sensiblement perpendiculaires entre eux.

La grille 50 est réalisée en matériau métallique, typiquement en acier inoxydable, entre autres pour obtenir une rigidité convenable de la grille 50, pour limiter son usure au contact de la fritte de verre 7 et pour limiter le risque de polluer la fritte de verre avec le matériau constitutif de la grille 50.

Le plateau 5 est équipé d'un rebord 53 situé sur tout le pourtour de la grille 50 et fixé par des boulons 54 à la grille 50. Ce rebord 53 sert à renforcer mécaniquement la grille, en particulier lorsque celle-ci est mise en vibration par les éléments vibrants 56.

Les éléments vibrant 56 sont fixés par boulonnage à la grille 50. Ils sont alimentés chacun en air comprimé, depuis l'extérieur du creuset froid 1, par un conduit rigide 55, le(s) conduit(s) rigide(s) 55 étant relié(s) au tuyau flexible 37.

Les conduits 55 ont chacun une forme générale de V et sont vissés à la tige 30. Les conduits 55 sont reliés fluidiquement entre eux. Ils servent de raccord d'alimentation en air entre les éléments vibrants 56 et le tuyau flexible 37.

Le tuyau flexible 37 s'étend le long de la tige 30. Il débouche directement dans un des conduits 55 et il alimente l'autre conduit 55 par l'intermédiaire du conduit 55 dans lequel il débouche.

Les conduits d'air 55, le tuyau flexible 37 et les éléments vibrants 56 forment un vibrateur pneumatique conçu pour faire vibrer la grille 50.

Afin de relier mécaniquement le plateau 5 à la tige 30, le plateau 5 comprend également une portion de raccordement 58 coopérant avec une chape 36. Cette chape 36 relie de manière démontable le plateau 5 à la tige 30.

La chape 36 comprend un pion de liaison en rotation 39 équipé d'une portion de préhension. Le pion 39 relie mécaniquement la tige 30 à la chape femelle 58. Il coopère avec une goupille qui empêche l'enlèvement du pion 39.

La chape 36 permet au plateau 5 de pivoter par rapport à la tige 30 autour d'un axe de rotation Y2-Y2 qui est sensiblement orthogonal à l'axe longitudinal Z-Z. L'axe Y2-Y2 est sensiblement parallèle à l'axe Y1-Y1. Cet axe de rotation Y2-Y2 passe par le pion 39 lorsque le plateau 5 est relié mécaniquement à la tige 30.

La liaison à la fois rotule et en translation de la tige 30 relativement à la bride de maintien 4 d'une part et la liaison pivot du plateau 5 par rapport à la tige 30 d'autre part permettent de lisser la fritte de verre 7 dans sensiblement toutes les directions à l'intérieur du creuset froid 1 jusqu'à obtenir une planéité convenable de la fritte de verre 7.

En particulier, la liaison pivot autour de l'axe Y2-Y2 du plateau 5 relativement à la tige 30 permet au plateau 5 de s'adapter plus efficacement à la forme du talus formé par la fritte de verre 7 lorsque celle-ci vient d'être introduite dans le creuset froid 1. La grille 50 est notamment apte à épouser à tout moment la pente de l'amas de fritte de verre 7 dans le creuset froid 1.

La fritte de verre 7, constituée de verre concassé, a un aspect granulaire et forme généralement un tas de forme sensiblement conique dans le creuset 1 avant d'être lissée.

Le lissage de la fritte de verre 7 par l'outil de lissage 3 peut avoir lieu peu après le remplissage du creuset 1 avec de la fritte de verre 7, suite à un changement de nature de la matière radioactive à vitrifier ou suite à une opération de maintenance.

Une fois que la fritte de verre 7 a été lissée jusqu'à obtenir une planéité convenable, l'outil de lissage est retiré du creuset et la fritte de verre est mise en fusion. Puis, la matière radioactive à vitrifier est introduite dans l'ouverture 24 prévue à cet effet. Cette matière radioactive est mélangée à la fritte de verre 7 préalablement fondue, afin d'incorporer la matière radioactive dans la matrice vitreuse pour former un verre immobilisant la matière radioactive après refroidissement.

Bien entendu, diverses modifications peuvent être apportées par l'homme du métier à l'invention qui vient d'être décrite sans sortir du cadre de l'exposé de l'invention.

En particulier, les éléments vibrants 56 pourraient être alimentés en gaz sous pression autre que de l'air.

Par ailleurs, le plateau 5 peut être relié à la tige 30 par une liaison rotule plutôt que par une liaison pivot autour de l'axe Y2-Y2. De manière similaire, la tige 30 n'est pas nécessairement mobile par rapport à la bride de maintien 4 selon quatre degrés de liberté. Par exemple, elle peut être mobile par rapport à la bride de maintien 4 uniquement selon trois degrés de liberté en rotation, par une liaison rotule.

## Revendications

1. Outil de lissage (3) configuré pour lisser de la fritte de verre (7) en milieu radioactif, comprenant :
une tige (30),
une grille (50) conçue pour être en contact de la fritte de verre (7) à lisser, la grille (50) étant reliée mécaniquement à la tige (30), et
au moins un vibrateur (37, 55, 56) configuré pour faire vibrer la grille (50).

2. Outil de lissage (3) selon la revendication précédente, dans lequel le vibrateur (37, 55, 56) est configuré pour faire vibrer pneumatiquement la grille (50), en étant alimenté en gaz sous pression, de préférence en air sous pression.

3. Outil de lissage (3) selon la revendication précédente, dans lequel le vibrateur (37, 55, 56) comprend :
des éléments vibrants pneumatiques (56) fixés à la grille (50) et configurés pour faire vibrer la grille (50), et
un tuyau (37, 55) s'étendant le long de la tige (30) et destiné à alimenter les éléments vibrants pneumatiques (56) en gaz sous pression.

4. Outil de lissage (3) selon l'une quelconque des revendications précédentes, dans lequel dans lequel la grille (50) est reliée de façon mobile par rapport à la tige (30).

5. Outil de lissage (3) selon la revendication précédente, dans lequel la grille (50) est configurée pour pivoter par rapport à la tige (30), de préférence autour d'un axe orthogonal (Y2-Y2) à l'axe longitudinal (Z-Z) de la tige.

6. Outil de lissage (3) selon l'une quelconque des revendications précédentes, dans lequel la grille (50) comporte des évidements (52) répartis selon un maillage régulier.

7. Outil de lissage (3) selon l'une quelconque des revendications précédentes, comprenant une bride de maintien (4) configurée pour être fixée sur un couvercle (2) pour creuset de fusion par induction (1), de préférence un creuset froid de fusion par induction,
la tige (30) traversant la bride de maintien (4) et étant mobile par rapport à la bride de maintien (4), de préférence au moins en translation.

8. Outil de lissage (3) selon la revendication précédente, dans lequel la tige (30) est configurée pour pivoter relativement à la bride de maintien (4) autour d'un premier axe de rotation (X-X), en étant de préférence reliée au moins par une liaison rotule (34) à la bride de maintien (4).

9. Outil de lissage (3) selon l'une quelconque des revendications 7 à 8, dans lequel la bride de maintien (4) comporte un orifice de passage d'un tuyau d'alimentation en gaz sous pression.

10. Creuset (1) pour la fusion par induction de matière radioactive et de fritte de verre, de préférence creuset froid, comprenant :
un réceptacle comprenant un fond (12) et un couvercle (2), le réceptacle délimitant une cavité,
un outil de lissage (3) selon l'une quelconque des revendications précédentes, la grille (50) étant configurée pour être logée dans la cavité pour lisser de la fritte de verre (7) à l'intérieur de la cavité.

11. Creuset (1) selon la revendication précédente, comprenant une bride de maintien (4) fixée au couvercle (2), le couvercle (2) comprenant une ouverture (24) d'introduction de matières, notamment la matière radioactive, et une bouche (25) pour le passage de l'outil de lissage.

## Patentansprüche

1. Glättungswerkzeug (3), das dazu konfiguriert ist, Glasmasse (7) in einer radioaktiven Umgebung zu glätten, umfassend:
eine Stange (30),
ein Gitter (50), das dazu ausgelegt ist, in Kontakt mit der zu glättenden Glasmasse (7) zu sein, wobei das Gitter (50) mechanisch mit der Stange (30) verbunden ist, und
wenigstens eine Vibrationseinrichtung (37, 55, 56), die dazu konfiguriert ist, das Gitter (50) vibrieren zu lassen.

2. Glättungswerkzeug (3) nach dem vorhergehenden Anspruch, wobei die Vibrationseinrichtung (37, 55, 56) dazu konfiguriert ist, das Gitter (50) pneumatisch vibrieren zu lassen, indem es mit einem Gas unter Druck versorgt wird, vorzugsweise mit Druckluft.

3. Glättungswerkzeug (3) nach dem vorhergehenden Anspruch, wobei die Vibrationseinrichtung (37, 55, 56) Folgendes umfasst:
pneumatische Vibrationselemente (56), die an dem Gitter (50) befestigt und dazu konfiguriert sind, das Gitter (50) vibrieren zu lassen, und
einen Schlauch (37, 55), der sich entlang der Stange (30) erstreckt und dazu ausgelegt ist, die pneumatischen Vibrationselemente (56) mit Gas unter Druck zu versorgen.

4. Glättungswerkzeug (3) nach einem der vorhergehenden Ansprüche, wobei das Gitter (50) bezüglich der Stange (30) auf bewegliche Weise verbunden ist.

5. Glättungswerkzeug (3) nach dem vorhergehenden Anspruch, wobei das Gitter (50) dazu konfiguriert ist, bezüglich der Stange (30) zu schwenken, vorzugsweise um eine Achse (Y2-Y2), die orthogonal ist zur Längsachse (Z-Z) der Stange.

6. Glättungswerkzeug (3) nach einem der vorhergehenden Ansprüche, wobei das Gitter (50) Aussparungen (52) umfasst, die gemäß einem gleichmäßigen Netz verteilt sind.

7. Glättungswerkzeug (3) nach einem der vorhergehenden Ansprüche, umfassend einen Halteflansch (4), der dazu konfiguriert ist, auf einem Deckel (2) für einen Induktionsschmelztiegel (1) befestigt zu sein, vorzugsweise einem Kaltinduktionsschmelztiegel,
wobei die Stange (30) den Halteflansch (4) durchsetzt und bezüglich des Halteflanschs (4) beweglich ist, vorzugsweise zumindest in Translation.

8. Glättungswerkzeug (3) nach dem vorhergehenden Anspruch, wobei die Stange (30) dazu konfiguriert ist, relativ zum Halteflansch (4) um eine erste Rotationsachse (X-X) zu schwenken, wobei sie vorzugsweise wenigstens durch eine Gelenkverbindung (34) mit dem Halteflansch (4) verbunden ist.

9. Glättungswerkzeug (3) nach einem der Ansprüche 7 bis 8, wobei der Halteflansch (4) eine Öffnung zum Durchgang eines Schlauchs zur Versorgung mit Gas unter Druck umfasst.

10. Tiegel (1) zum Induktionschmelzen von radioaktivem Material und Glasmasse, vorzugsweise Kalttiegel, umfassend:
einen Behälter, der einen Boden (12) und einen Deckel (2) umfasst, wobei der Behälter einen Hohlraum begrenzt,
ein Glättungswerkzeug (3) nach einem der vorhergehenden Ansprüche, wobei das Gitter (50) dazu konfiguriert ist, in dem Hohlraum aufgenommen zu sein, um die Glasmasse (7) im Inneren des Hohlraums zu glätten.

11. Tiegel (1) nach dem vorhergehenden Anspruch, umfassend einen Halteflansch (4), der an dem Deckel (2) befestigt ist, wobei der Deckel (2) eine Öffnung (24) zur Einbringung von Materialien umfasst, insbesondere von radioaktivem Material, sowie einen Mund (25) für den Durchgang des Glättungswerkzeugs.

## Claims

1. A smoothing tool (3) configured for smoothing glass frit (7) in a radioactive environment, comprising:
a rod (30),
a grid (50) configured to be in contact with the grass frit (7) to be smoothed, the grid (50) being mechanically connected to the rod (30), and
at least one vibrator (37, 55, 56) configured to vibrate the grid (50).

2. The smoothing tool (3) according to the preceding claim, wherein the vibrator (37, 55, 56) is configured to pneumatically vibrate the grid (50), by being supplied with pressurised gas, preferably pressurised air.

3. The smoothing tool (3) according to the preceding claim, wherein the vibrator (37, 55, 56) comprises:
pneumatic vibrating elements (56) attached to the grid (50) and configured to vibrate the grid (30), and
a pipe (37, 55) extending along the rod (30) and configured to supply the pneumatic vibrating elements (56) with pressurised gas.

4. The smoothing tool (3) according to any of the preceding claims, wherein the grid (50) is movably connected to the rod (30).

5. The smoothing tool (3) according to the preceding claim, wherein the grid (50) is configured to pivot relative to the rod (30), preferably around an axis (Y2-Y2) orthogonal to the longitudinal axis (Z-Z) of the rod.

6. The smoothing tool (3) according to any of the preceding claims, wherein the grid (50) includes recesses (52) distributed in a regular pattern.

7. The smoothing tool (3) according to any of the preceding claims, comprising a holding flange (4) configured to be attached to a cover (2) for an induction-melting crucible (1), preferably an induction-melting cold crucible,
the rod (30) passing through the holding flange (4) and being, preferably at least translationally, movable relative to the holding flange (4).

8. The smoothing tool (3) according to the preceding claim, wherein the rod (30) is configured to pivot with respect to the holding flange (4) about a first axis of rotation (X-X), by being preferably connected at least through a ball-joint connection (34) to the holding flange (4).

9. The smoothing tool (3) according to any of claims 7 to 8, wherein the holding flange (4) includes a clearance hole for a pressurised gas supply pipe.

10. A crucible (1) for induction-melting radioactive material and glass frit, preferably a cold crucible, comprising:
a receptacle comprising a bottom (12) and a cover (2), the receptacle delimiting a cavity,
a smoothing tool (3) according to any of the preceding claims, the grid (50) being configured to be accommodated in the cavity to smooth the glass frit (7) inside the cavity.

11. The crucible (1) according to the preceding claim, comprising a holding flange (4) attached to the cover (2), the cover (2) comprising an aperture (24) for introducing materials, in particular radioactive material, and a clearance mouth (25) for the smoothing tool.
